Europäisches Patentamt

European Patent Office

Office européen des brevets

(19)

(11) EP 0 666 432 B1

(12) FASCICULE DE BREVET EUROPEEN

(45) Date de publication et mention
de la délivrance du brevet:
**10.11.1999  Bulletin 1999/45**

(51) Int Cl.6: **F16F 7/14**

(21) Numéro de dépôt: **95400154.1**

(22) Date de dépôt: **24.01.1995**

(54) **Plot amortisseur de chocs et de vibrations**

Stoss- und schwingungsdämpfende Klemme

Shock- and vibration-damping stud

(84) Etats contractants désignés:
**AT BE CH DE DK ES FR GB IT LI NL PT SE**

(30) Priorité: **03.02.1994  FR 9401233**

(43) Date de publication de la demande:
**09.08.1995  Bulletin 1995/32**

(73) Titulaire: **SOCITEC
SOCIETE POUR LE COMMERCE
INTERNATIONAL ET LES ECHANGES
TECHNIQUES
F-78500 Sartrouville (FR)**

(72) Inventeur: **Hay, Jean-Yves
F-92700 Colombes (FR)**

(74) Mandataire: **Desaix, Anne et al
Ernest Gutmann - Yves Plasseraud S.A.
3, rue Chauveau-Lagarde
75008 Paris (FR)**

(56) Documents cités:
**FR-A- 1 369 294          FR-A- 2 033 193
US-A- 3 023 993          US-A- 3 165 945**

Printed by Jouve, 75001 PARIS (FR)

**Description**

La présente invention concerne un plot amortisseur de chocs et/ou de vibrations entre une première masse et une seconde masse.

Elle concerne également un procédé de fabrication d'un tel plot.

Elle trouve une application particulièrement importante, bien que non exclusive, dans le domaine des dispositifs anti-vibratoires et anti-chocs reliant verticalement une masse porteuse à une masse portée.

On connaît déjà (EP-A-499,518) des plots permettant d'amortir les chocs et les vibrations entre deux masses, comportant des tronçons de câbles métalliques fixés sur des supports solidaires des masses à isoler.

Ces dispositifs présentent des inconvénients. Ils sont en effet coûteux, complexes à fabriquer et difficiles à installer.

La présente invention vise à fournir un plot amortisseur et un procédé de fabrication de plots, répondant mieux que ceux antérieurement connus aux exigences de la pratique, notamment en ce qu'elle propose un plot amortisseur de grande simplicité à raideur réglable pour un même diamètre de câble et une même hauteur, aisé à fabriquer et à installer et qui peut présenter une forte raideur.

Dans ce but, l'invention propose un plot amortisseur selon les caractéristiques de la revendication 1.

Ce plot amortisseur est agencé pour présenter un sens premier de fonctionnement qui est confondu avec la direction axiale dudit plot.

Par tronçon on entend une partie continue du câble.

Pour former un renflement au niveau de la partie médiane du tronçon, le câble est par exemple prédéformé de façon permanente dans le sens radial pour former un renflement au niveau de la partie médiane du tronçon, les torons y étant plus écartés les uns des autres que dans les parties terminales dudit tronçon, ce qui a pour avantage de permettre un déplacement relativement important et une bonne absorption des chocs et vibrations dans les sens axial et radial du plot.

Dans un mode de réalisation avantageux, les torons du câble sont enroulés les uns autour des autres en hélice selon un premier pas.

Une telle disposition facilite notamment la fabrication du plot dont les torons n'auront pas tendance à se séparer naturellement les uns des autres et permet d'améliorer la raideur du plot.

Avantageusement le câble présente une cavité axiale à l'état libre. Cette cavité est par exemple obtenue par extraction de l'âme centrale ou d'un groupe axial de torons, appartenant à un câble multi-couches, c'est-à-dire comportant au moins deux couches concentriques de torons.

Par état libre on entend l'état du câble avant pré-déformation lorsqu'il n'est soumis à aucune contrainte de traction, de compression ou de cisaillement.

Dans un mode préféré de réalisation le tronçon de câble est déformé de façon permanente par torsion dans le sens inverse du premier pas et par compression dans le sens axial du câble, pour former la partie médiane renflée du tronçon de câble.

Dans des modes de réalisation avantageux on a de plus recours à l'une et/ou à l'autre des dispositions suivantes :

- le plot comporte des premier et second moyens de fixation, respectivement des première et seconde extrémités du tronçon de câble, directement, ou indirectement, sur les première et seconde masses, lesdits premier et second moyens de fixation étant situés ou sensiblement situés dans le prolongement axial du tronçon, le premier pas de l'hélice étant de longueur supérieure à la distance séparant les moyens de fixation.

  Par distance séparant les moyens de fixation, il convient d'entendre la distance libre du câble entre les points les plus rapprochés des moyens de fixation situés en vis à vis, lorsque le câble est à l'état libre ;
- le câble comporte un seul tronçon, les moyens de fixation des extrémités dudit tronçon étant directement et respectivement agencés pour être solidaires desdites première et seconde masses ;
- le plot comporte au moins deux tronçons solidaires l'un de l'autre appartenant au même câble, disposés axialement et séparés par une pièce intermédiaire de fixation fixée sur le câble, par exemple par sertissage ;
- le plot comporte au moins deux câbles séparés par une pièce intermédiaire, par exemple de diamètre différent ;
- le câble comporte au moins deux types de torons différents ;
- les fils des torons sont enroulés les uns autour des autres en hélice dans le sens inverse du sens de l'hélice formée par les torons ;
- le câble comporte six torons ;
- le câble comporte au moins deux couches de torons ;
- au moins un des moyens de fixation comprend une partie tubulaire dans laquelle s'insère à frottement une extrémité correspondante du câble ;
- l'extrémité du câble est fixée à l'extrémité externe de la partie tubulaire du moyen de fixation, par rapport au câble ;
- le câble est fixé aux moyens de fixation par soudage ;
- le câble est fixé aux moyens de fixation par collage ; pour ce faire le tronçon de câble est par exemple fixé aux moyens de fixation par enduction de colle aux extrémités ou par dépôt d'une colle ou résine dans la partie tubulaire borgne, c'est-à-dire obturée à son extrémité, des moyens de fixation ;
- le câble est fixé aux moyens de fixation par sertissage ;

- le câble est fixé aux moyens de fixation par surmoulage des extrémités du tronçon dans une matière thermodurcissable ou élastomérique introduite entre les extrémités de câble et la partie tubulaire des moyens de fixation ; on peut ensuite et par exemple effectuer un sertissage ou rétreint de la partie tubulaire des moyens de fixation sur le câble.

- le câble ou le ou les tronçons de câble sont fixés aux moyens de fixation par une combinaison quelconque des moyens décrits ci-dessus.

L'invention propose également un procédé de fabrication d'un plot amortisseur de chocs et/ou de vibrations entre une première et une seconde masses, à partir d'un câble comprenant plusieurs torons enroulés les uns autour des autres en hélice avec un premier pas et délimitant entre eux une cavité axiale à l'état libre, caractérisé en ce que

- on fixe rigidement les extrémités du câble sur des moyens de fixation propres à être rendus solidaires desdites masses,

- on déforme de façon permanente ledit câble en comprimant le plot dans le sens axial et en tordant ledit plot dans le sens inverse du premier pas de l'hélice, de sorte qu'on obtient un tronçon de câble sensiblement rectiligne présentant une partie centrale évidée et renflée.

Avantageusement, on règle l'angle de torsion et la force de compression dans le sens axial, en fonction de la hauteur libre et du diamètre de câble pour des raideurs axiales et radiales recherchées du plot. Le réglage se fait en fonction de la constitution du câble du tronçon connue en elle-même par l'homme du métier.

L'invention sera mieux comprise à la lecture de la description qui suit de modes particuliers de réalisation, donnés à titre d'exemple non limitatif.

La description se réfère aux dessins qui l'accompagnent, dans lesquels :

- La figure 1 montre un câble à l'état libre comportant six torons multi-fils enroulés en hélice, présentant une cavité axiale.
- La figure 2 est une coupe selon II-II de la figure 1.
- La figure 3 est une vue en élévation d'un mode de réalisation d'un tronçon de câble selon l'invention.
- La figure 4 est une vue latérale, partiellement en coupe, d'un câble et de ses points de fixation avant torsion et compression pour former un plot selon le mode de réalisation de l'invention plus particulièrement décrit ici.
- La figure 5 est une vue latérale, partiellement en coupe, du plot obtenu à partir du câble de la figure 4, après torsion et compression.
- La figure 6 est une vue latérale, en élévation, partiellement en coupe, d'un autre mode de réalisation d'un plot selon l'invention, comprenant deux tronçons.

- Les figures 7A et 7B montrent, en coupe, un premier mode de réalisation des moyens de fixation appartenant à un plot selon l'invention, par sertissage.
- Les figures 8A et 8B montrent, en coupe, un deuxième mode de réalisation des moyens de fixation appartenant à un plot selon l'invention, par sertissage et soudage d'une pièce complémentaire.
- La figure 9 montre, en coupe, un troisième mode de réalisation des moyens de fixation appartenant à un plot selon l'invention, par soudage et apport d'une pièce complémentaire.
- La figure 10 montre, en coupe, un quatrième mode de réalisation des moyens de fixation des extrémités d'un câble appartenant à un plot selon l'invention, par moulage.
- La figure 11 est une vue en coupe d'un accouplement entre deux masses, comprenant deux plots selon le mode de réalisation de l'invention plus particulièrement décrit ici.
- La figure 12 est une vue schématique, en perspective, d'un accouplement entre une pièce porteuse et une pièce portée, comprenant deux rangées de plots selon l'invention.

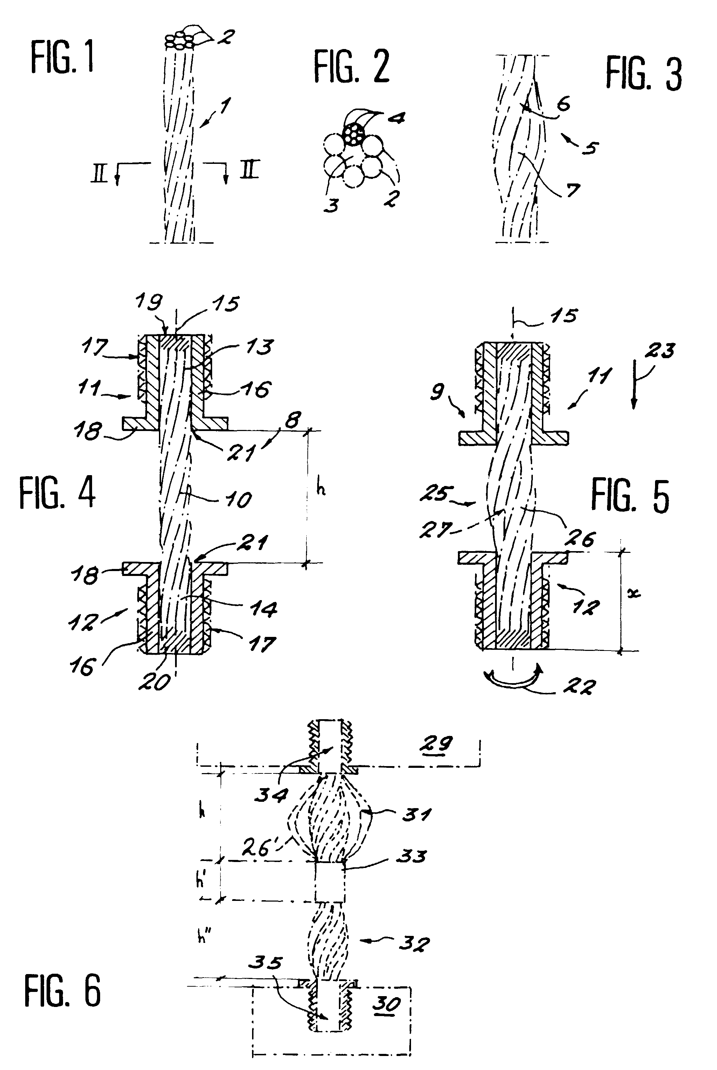

La figure 1 montre un câble 1 métallique, comprenant six torons 2 identiques, par exemple de diamètre d = 6 mm, enroulés en hélice autour d'une âme centrale (non représentée car elle a été extraite du câble), selon un premier pas $\underline{p}$, par exemple égal à 10 cm.

Le câble 1 présente (voir figure 2) une cavité axiale 3 autour de laquelle sont répartis angulairement et régulièrement les six torons, chaque toron étant respectivement en contact avec les deux torons qui lui sont adjacents.

Chaque toron est par exemple constitué par sept fils 4 de diamètre $\underline{d'}$ = 2 mm dont six fils sont enroulés en hélice autour d'un fil rectiligne central selon un pas $\underline{p'}$ de sens inverse au premier pas $\underline{p}$.

La figure 3 montre le tronçon 5 d'un plot selon l'invention constitué à partir du câble 1 de la figure 1.

Le tronçon présente une partie médiane 6 renflée formant une cavité centrale 7 qui va permettre le filtrage des chocs et des vibrations recherché.

La figure 4 montre une pièce 8 à partir de laquelle on obtient le plot 9 de la figure 5.

La pièce 8 comprend un tronçon de câble 10 rectiligne, à l'état libre et des premiers et seconds moyens 11 et 12 de fixation des extrémités respectives 13 et 14 du tronçon de câble sur une première et une deuxième masse (non représentées). Les premiers et seconds moyens sont situés dans le prolongement axial (axe 15) du tronçon de câble, le premier pas $\underline{p}$ de l'hélice étant de longueur égale ou supérieure à la distance $\underline{h}$ séparant les moyens de fixation.

Les moyens de fixation 11 et 12 sont identiques. Ils comprennent une partie tubulaire métallique 16, filetée extérieurement en 17, de diamètre interne légèrement supérieur au diamètre externe du câble à l'état libre, et se terminant du côté du câble par une collerette annulaire 18 s'étendant radialement vers l'extérieur, de butée avec les surfaces des masses.

Les extrémités 13 et 14 du tronçon de câble sont introduites dans les parties tubulaires avec lesquelles elles coopèrent à frottement jusqu'aux extrémités, respectivement 19 et 20, desdites parties tubulaires, externes par rapport au câble, avec lesquelles elles sont respectivement fixées par soudage.

Avantageusement, les bords internes des collerettes 18 sont chanfreinés en 21, la distance $h$ entre lesdites collerettes étant inférieure au pas $p$.

La figure 5 montre le plot 9 obtenu par torsion (flèche 22) autour de l'axe 15, dans le sens inverse du premier pas et par compression (flèche 23) dans le sens axial du tronçon de câble de la pièce de la figure 4.

Torsion et compression sont telles que le câble prend une nouvelle forme à l'état libre, déformée par rapport à la précédente de façon rémanente et permanente, de façon à présenter un tronçon de câble 25 avec une partie médiane 26 renflée formant une cavité 27 centrale et axiale, selon l'invention. La partie renflée est symétrique ou sensiblement symétrique par rapport à l'axe 15, et s'inscrit dans un cercle de plus grand diamètre que celui du tronçon de câble initial.

La figure 6 montre un plot 28 à double étage entre une première masse 29 et une deuxième masse 30 comportant deux tronçons 31 et 32 selon l'invention, disposés axialement et séparés par une pièce intermédiaire 33.

Les longueurs de ces deux tronçons peuvent être égales ou différentes selon le mode de fonctionnement du plot. Par exemple il peut s'agir d'un plot à double étage ainsi constitué.

1er étage (hauteur $h$)- tronçon 31 anti-vibratoire en basse fréquence à faible raideur et grand déplacement statique présentant une partie médiane 26' trés renflée, par exemple sensiblement sphérique.

2ème étage (hauteur $h''$) - tronçon 32 anti-chocs avec une partie médiane 26 moins renflée que celle du 1er étage, pour obtenir une moyenne ou une grande raideur permettre d'absorber les chocs importants, après l'écrasement maximum du 1er étage.

La pièce intermédiaire 33 est par exemple constituée par un tube percé axialement d'un alésage de diamètre légèrement supérieur au diamètre du tronçon de câble rectiligne, et d'une hauteur h'. Cette pièce intermédiaire 33 est sertie radialement autour des tronçons de câble 31 et 32 afin de maintenir les longueurs des étages égales (ou différentes), avant déformation pour constitution desdits tronçons 31 et 32 selon ce mode de réalisation de l'invention.

La pièce intermédiaire 33 sera maintenue radialement lors de la fabrication du plot à double étage pour éviter tout flambage des tronçons de câble 31 et 32, dans les phases compression/torsion, le rapport hauteur totale ($\underline{h}+\underline{h'}+\underline{h''}$) sur le diamètre du tronçon étant trop important pour éviter le flambage lors de la fabrication, sachant que la hauteur $h$ peut être d'environ 3 à 10 fois supérieure au diamètre du tronçon, par exemple 7 fois supérieure.

Dans un autre mode de réalisation, le plot est formé de deux morceaux de câbles séparés, co-axiaux, fixés sur une pièce intermédiaire de part et d'autre de celle-ci. Les câbles peuvent être de diamètre et de longueur et/ou de constitutions différents.

Pour revenir à la figure 6, les extrémités opposées 34 et 35 des deux tronçons sont quant à elles directement et respectivement fixées aux masses 29 et 30, par exemple via des moyens de fixation du type de ceux décrits en référence à la figure 4.

Une telle disposition en cas de longueur des tronçons égales, permet d'obtenir une meilleure absorption des chocs.

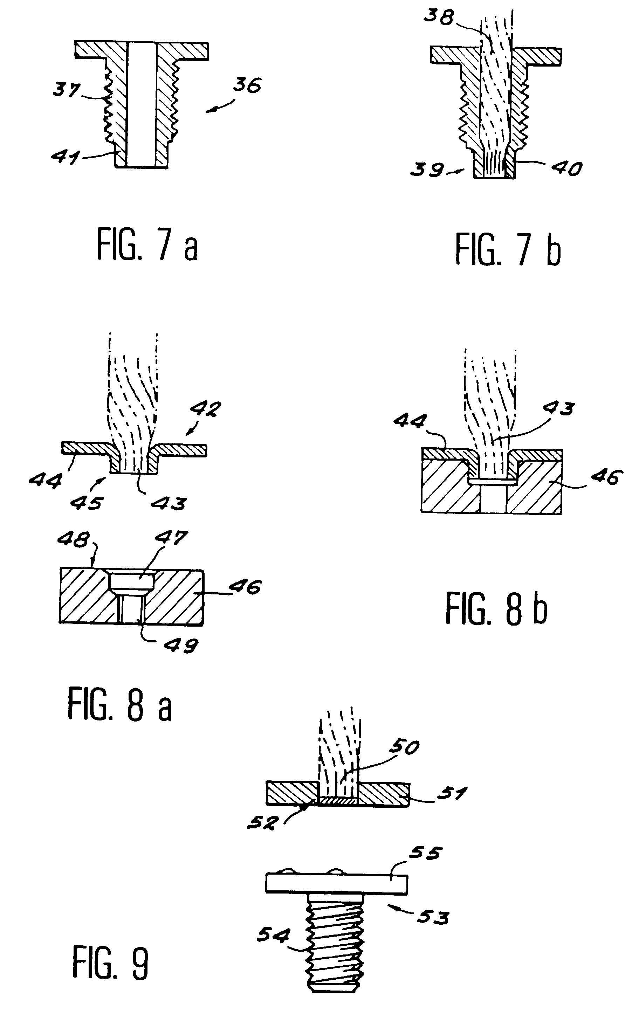

Les figures 7a et 7b montrent des moyens 36 de fixation présentant ici encore une partie tubulaire 37 de diamètre interne égal ou légèrement supérieur au diamètre externe du câble 38, l'extrémité 39 de celui-ci étant fixée à l'extrémité 40 de la partie tubulaire par compression radiale de ladite portion d'extrémité tubulaire 41 (voir figure 7b).

Les figures 8a et 8b montrent un autre mode de réalisation des moyens de fixation 42 de l'extrémité 43 du tronçon de câble, par sertissage de cette dernière sur une plaque 44 munie d'un orifice à collerette 45.

La plaque 44 est ensuite fixée sur une pièce 46 présentant d'un côté un évidement 47 de forme complémentaire avec celle de la collerette, par exemple par soudage.

L'autre côté de la pièce 44 présente par exemple un alésage taraudé 49 pour fixation par vis sur une des masses.

La figure 9 montre encore un autre mode de réalisation des moyens de fixation. L'extrémité 50 du câble est ici fixée par soudage sur une plaque 51 percée de part en part d'un orifice 52 de diamètre interne égal ou un peu supérieur à celui de ladite extrémité.

Une pièce 53 munie d'une vis 54 de fixation et présentant une plaque 55 de jonction avec la plaque 51, est ensuite fixée par exemple par soudage avec ladite plaque 51.

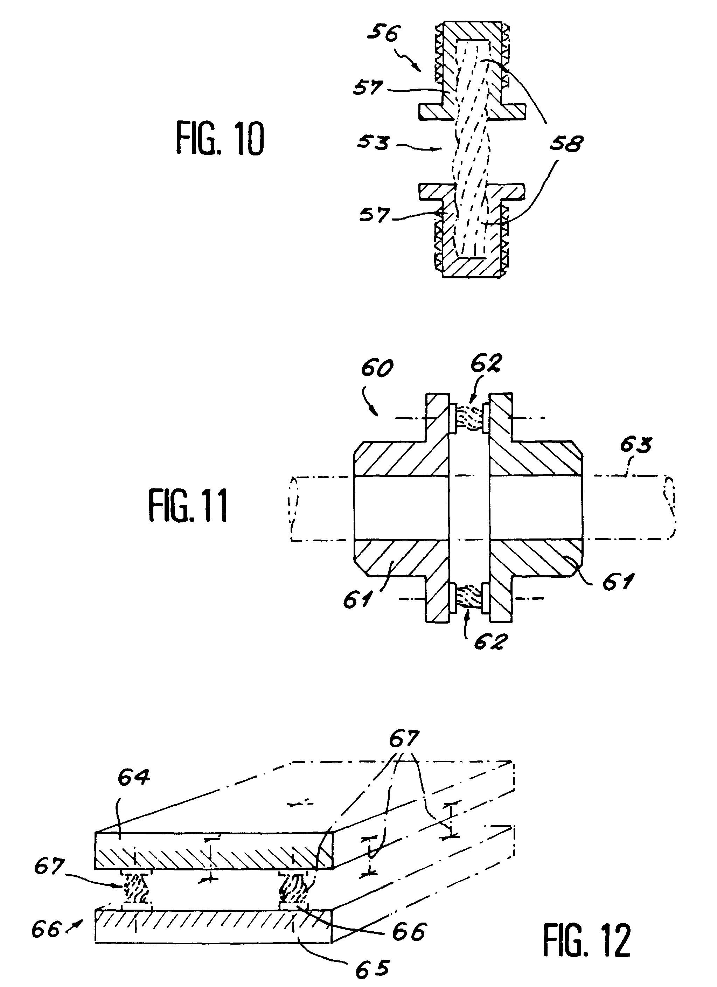

La figure 10 montre un autre mode de réalisation des moyens 56 de fixation comprenant deux pièces d'extrémité identiques 57 présentant une forme tubulaire taraudée extérieurement, moulées autour des extrémités 58 du tronçon de câble 59.

La figure 11 montre un accouplement latéral 60 entre deux pièces 61, utilisant deux plots 62 selon le mode de réalisation de l'invention plus particulièrement décrit ici. Les pièces 61 sont soutenues axialement et verticalement, par exemple par un arbre commun 63.

La figure 12 montre une plaque 64 porteuse, à laquelle est suspendue une plaque portée 65 par l'intermédiaire de deux rangs 66 de trois plots 67 selon l'invention.

On va maintenant décrire un mode de réalisation du procédé de fabrication du plot selon l'invention, en faisant plus particulièrement référence aux figures 1, 4 et 5.

Le câble multi-torons multi-fils 1 généralement métallique est évidé axialement, en enlevant l'âme centrale par traction.

Le câble est ensuite coupé pour former un premier tronçon de longueur L.

On fixe ensuite les pièces 11 et 12 sur le tronçon. Pour ce faire, on enfile les parties tubulaires 16 sur le câble, jusqu'à arasement des faces externes des extrémités 19 et 20 du câble avec l'extrémité desdites parties tubulaires.

Les dimensions axiales hors-tout $\underline{x}$ des parties tubulaires sont telles que :

$$L - 2x = h$$

avec $h \leq p$

(p étant le premier pas de l'hélice du câble avant déformation)

Puis on soude les extrémités 19 et 20 aux parties tubulaires 16, la soudure pénétrant notamment dans la cavité axiale sur une petite distance à l'intérieur desdites parties tubulaires.

On comprime ensuite en tordant simultanément l'ensemble ainsi formé au-delà des limites élastiques du câble pour obtenir le plot 9 de la figure 5 déformée en permanence et présentant la partie renflée 26.

Comme il va de soi et comme il résulte d'ailleurs de ce qui précède, la présente invention ne se limite pas uniquement aux modes de réalisation plus particulièrement décrits ici. Elle en embrasse au contraire toutes les variantes et notamment celles où le câble n'est pas métallique, mais en matière synthétique, par exemple en matière connue sous la dénomination KEVLAR, celles où le câble comprend plusieurs rangs de torons, par exemple trois rangs, le cas où le diamètre des torons est inférieur à de l'ordre du demi-millimètre, ce qui augmente la souplesse de l'amortisseur, ou supérieur à 2 cm, ce qui en augmente la raideur, celles où l'angle de la tangente à la partie médiane renflée avec l'axe du tronçon est compris entre 30° et 50°, par exemple égal à de l'ordre de 45°, celles où le nombre de torons est plus important, par exemple égal à dix huit ou trente deux torons, sur plusieurs couches.

En cas de moulage des extrémités de câbles dans les moyens de fixation, celui-ci peut avantageusement être effectué avec de l'acier, de l'aluminium, du plastique et/ou toute matière moulable par injection ou par gravité.

## Revendications

1. Plot (5,28,56,62,67) amortisseur de chocs et/ou de vibrations entre une première et une seconde masses (29,61,64 ; 30,61,65), caractérisé en ce que il comporte :

   - au moins un câble sensiblement rectiligne comprenant plusieurs torons (2) multi-fils, ledit câble comportant au moins un tronçon (5,25,31,32) présentant une partie médiane (6,26) renflée formant une cavité centrale (7,27) ; et
   - des premier et second moyens (11,12,36,42,56) de fixation des extrémités (13,14) du tronçon de câble directement, ou indirectement, sur lesdites première et seconde masses, lesdits premier et second moyens de fixation étant situés ou sensiblement situés dans le prolongement axial (15) dudit tronçon.

2. Plot amortisseur selon la revendication 1, caractérisé en ce que les torons (2) du câble sont enroulés les uns autour des autres en hélice selon un premier pas.

3. Plot selon l'une quelconque des revendications précédentes, caractérisé en ce que le câble présente une cavité axiale (3) à l'état libre.

4. Plot selon la revendication 3, caractérisé en ce que le câble (1,10) est pré-déformé de façon permanente par torsion dans le sens inverse du premier pas et compression dans le sens longitudinal, pour former la partie médiane (6,26) renflée dudit tronçon (5,25,31,32) de câble.

5. Plot selon l'une quelconque des revendications précédentes, caractérisé en ce que le premier pas de l'hélice est de longueur supérieure à la distance h séparant lesdits moyens de fixation.

6. Plot selon l'une quelconque des revendications précédentes, caractérisé en ce que le câble comporte un seul tronçon (25), les moyens (11,12) de fixation des extrémités dudit tronçon étant directement et respectivement agencées pour être solidaires desdites première et seconde masses.

7. Plot selon l'une quelconque des revendications 1 à 5, caractérisé en ce que il comporte au moins deux tronçons (31,32), disposés axialement et séparés par une pièce intermédiaire (33) de fixation, agencée pour être fixée latéralement.

8. Plot selon l'une quelconque des revendications 1 à 5, caractérisé en ce que il comporte au moins deux câbles disposés axialement et séparés par une pièce intermédiaire (33) de fixation.

9. Plot selon l'une quelconque des revendications précédentes, caractérisé en ce que le câble comporte au moins deux types de torons différents.

10. Plot selon l'une quelconque des revendications précédentes, caractérisé en ce que les fils des torons sont en forme d'hélice dont le sens est l'inverse du sens de l'hélice formée par les torons.

11. Plot selon l'une quelconque des revendications précédentes, caractérisé en ce que il comporte six torons.

12. Plot selon l'une quelconque des revendications précédentes, caractérisé en ce que il comporte au moins deux couches de torons.

13. Plot selon l'une quelconque des revendications précédentes, caractérisé en ce que au moins un des moyens (11,12,36,56) de fixation comprend une partie tubulaire (16) dans laquelle s'insèrent à frottement une extrémité (13,14) correspondante au câble.

14. Plot selon la revendication 13, caractérisé en ce que l'extrémité du câble est fixée à l'extrémité externe (19,20) de la partie tubulaire (16), par rapport au câble.

15. Plot selon l'une quelconque des revendications précédentes, caractérisé en ce que le câble est fixé aux moyens de fixation par soudage.

16. Plot selon l'une quelconque des revendications 1 à 14, caractérisé en ce le câble est fixé aux moyens de fixations par collage.

17. Plot selon la revendication 16, caractérisé en ce que le câble est fixé aux moyens de fixation par une colle ou résine dans une partie tubulaire borgne.

18. Plot selon l'une quelconque des revendications précédentes, caractérisé en ce que le câble est fixé aux moyens de fixation par sertissage.

19. Plot selon la revendication 18, caractérisé en ce que le câble est fixé aux moyens de fixation par surmoulage d'une matière thermodurcissable ou élastomérique entre le câble et la partie tubulaire, avec sertissage ou rétreint de celle-ci sur le câble.

20. Accouplement (60) entre deux masses caractérisé en ce que il comporte au moins deux plots selon l'une quelconque des revendications précédentes.

21. Application de l'accouplement selon la revendication 20, à la suspension verticale d'une masse (65) portée par une masse porteuse (64).

22. Procédé de fabrication d'un plot amortisseur de chocs et/ou de vibrations entre une première et une seconde masses, à partir d'un câble (1) comprenant plusieurs torons (2) enroulés les uns autour des autres en hélice avec un premier pas et délimitant entre eux une cavité axiale (3) à l'état libre, caractérisé en ce que

- on fixe rigidement les extrémités (13,14) du câble sur des moyens (11,12) de fixation propres à être rendus solidaires desdites masses ;
- on déforme de façon permanente ledit câble en comprimant le câble dans le sens longitudinal et en tordant ledit câble dans le sens inverse du premier pas de l'hélice, de sorte qu'on obtient un plot comportant entre lesdits moyens de (11,12) de fixation un tronçon (25) sensiblement rectiligne présentant une partie centrale (26) évidée et renflée.

23. Procédé selon la revendication 22, caractérisé en ce que on règle l'angle de torsion et la force de compression dans le sens axial en fonction de la raideur de plot recherchée, préalablement déterminée.

## Patentansprüche

1. Kontaktklotz (5, 28, 56, 62, 67) für die Dämpfung von Stoßbelastungen und/oder Vibrationen zwischen einer ersten und einer zweiten Masse (29, 61, 64; 30, 61, 65), **dadurch gekennzeichnet, daß** er folgendes aufweist

- mindestens ein weitgehend gerades Kabel mit einer Vielzahl von mehradrigen Litzen (2), wobei dieses Kabel mindestens einen Abschnitt (5, 25, 31, 32) mit einem ausgebauchten Mittelteil (6, 26) aufweist, welcher einen zentralen Hohlraum (7, 27) bildet; und
- erste und zweite Mittel (11, 12, 36, 42, 56) für die direkte oder indirekte Befestigung der Enden (13, 14) des Kabelabschnittes an dieser ersten und zweiten Masse, wobei diese ersten und zweiten Mittel für die Befestigung in oder weitgehend in der axialen Verlängerung (15) dieses Abschnittes angeordnet sind.

2. Kontaktklotz für die Stoßdämpfung nach Anspruch 1, **dadurch gekennzeichnet, daß** die Litzen (2) des Kabels wendelförmig in einer ersten Ganghöhe umeinander gewickelt sind.

3. Kontaktklotz für die Stoßdämpfung nach einem der vorausgegangenen Ansprüche, **dadurch gekenn-**

zeichnet, daß das Kabel einen offenen axialen Hohlraum (3) aufwgeist.

4. Kontaktklotz für die Stoßdämpfung nach Anspruch 3, **dadurch gekennzeichnet, daß** das Kabel (1, 10) permanent durch Verdrillung in entgegengesetzter Richtung zu der ersten Ganghöhe und Kompression in Längsrichtung vorgeformt wird, um den ausgebauchten mittleren Teil (6, 26) des Kabelabschnittes (5, 25, 31, 32) zu bilden.

5. Kontaktklotz für die Stoßdämpfung nach einem der vorausgegangenen Ansprüche, **dadurch gekennzeichnet, daß** die erste Ganghöhe der Wendel eine Länge hat, die größer ist, als der Abstand $\underline{h}$, welcher die genannten Befestigungsmittel voneinander trennt

6. Kontaktklotz für die Stoßdämpfung nach einem der vorausgegangenen Ansprüche, **dadurch gekennzeichnet, daß** das Kabel einen einzigen Abschnitt (25) aufweist wobei die Mittel (11, 12) für die Befestigung der Enden des Abschnittes direkt und jeweils so ausgelegt sind, daß sie mit der ersten und zweiten Masse fest verbunden werden können.

7. Kontaktklotz für die Stoßdämpfung nach einem der Ansprüche 1 bis 5, **dadurch gekennzeichnet, daß** er mindestens zwei axial angeordnete Abschnitte (31, 32) aufweist welche durch eine Zwischenbefestigung (33) voneinander getrennt sind, die in seitlicher Richtung fixiert werden kann.

8. Kontaktklotz für die Stoßdämpfung nach einem der Ansprüche 1 bis 5, **dadurch gekennzeichnet, daß** er mindestens zwei axial angeordnete Kabel aufweist, welche durch eine Zwischenbefestigung (33) voneinander getrennt sind,

9. Kontaktklotz für die Stoßdämpfung nach einem der vorausgegangenen Ansprüche, **dadurch gekennzeichnet, daß** das Kabel mindestens zwei verschiedene Arten von Litzen aufweist.

10. Kontaktklotz für die Stoßdämpfung nach einem der vorausgegangenen Ansprüche, **dadurch gekennzeichnet, daß** die Adern der Litzen die Form einer Wendel haben, deren Richtung entgegen der Richtung der von diesen Litzen gebildeten Wendel verlauft.

11. Kontaktklotz für die Stoßdämpfung nach einem der vorausgegangenen Ansprüche, **dadurch gekennzeichnet, daß** er sechs Litzen enthält.

12. Kontaktklotz für die Stroßdämpfung nach einem der vorausgegangenen Ansprüche, **dadurch gekennzeichnet, daß** er mindestens zwei Lagen von Litzen aufweist.

13. Kontaktklotz für die Stoßdämpfung nach einem der vorausgegangenen Ansprüche, **dadurch gekennzeichnet, daß** mindestens eines der Befestigungsmittel (11, 12, 36, 56) einen schlauchförmigen Teil (16) aufweist, in den ein entsprechendes Ende (13,14) des Kabels unter Reibung eingeschoben wird.

14. Kontaktklotz für die Stoßdämpfung nach Ansprüch 13, **dadurch gekennzeichnet, daß** das Ende des Kabels an dem äußeren Ende (19, 20) des schlauchförmigen Teils (16) gegenüber diesem Kabel angeordnet ist.

15. Kontaktklotz für die Stoßdämpfung nach einem der vorausgegangenen Ansprüche, **dadurch gekennzeichnet, daß** das Kabel an den Befestigungsmitteln angeschweißt ist.

16. Kontaktklotz für die Stoßdämpfung nach einem der Ansprüche 1 bis 14, **dadurch gekennzeichnet, daß** das Kabel durch Verklebung mit den Befestigungsmitteln verbunden ist.

17. Kontaktklotz für die Stoßdämpfung nach Anspruch 16, **dadurch gekennzeichnet, daß** das Kabel mit Hilfe eines Klebers oder Harzes in einem Blindloch eines Schlauches mit den Befestigungsmitteln verbunden ist.

18. Kontaktklotz für die Stoßdämpfung nach einem der vorausgegangenen Ansprüche, **dadurch gekennzeichnet, daß** das Kabel auf die Befestigungsmittel aufgebördelt ist.

19. Kontaktklotz für die Stoßdämpfung nach Anspruch 18, **dadurch gekennzeichnet, daß** das Kabel an den Befestigungsmitteln durch Vergießen eines warm härtenden oder elastomoren Materials befestigt ist, welches durch Bördeln oder Schrumpfen auf das Kabel aufgebracht wird.

20. Verbindung (60) zwischen zwei Massen, **dadurch gekennzeichnet, daß** sie mindestens zwei Kontaktklötze für die Stoßdämpfung nach einem der vorausgegangenen Ansprüche aufweist

21. Anwendung der Verbindung nach Anspruch 20 auf die vertikale Aufhängung einer Masse (65), die von einer Trägermasse (64) gehalten wird.

22. Verfahren für die Herstellung eines Kontaktklotzes für die Dämpfung von Stoßbelastungen und/oder Vibrationen zwischen einer ersten und einer zweiten Masse mit Hilfe eines Kabels (1), das aus mehreren Litzen (2) besteht, die mit einer ersten Ganghöhe wendelförmig umeinander gewickelt sind und untereinander einen freien axialen Hohlraum (3) bilden, **dadurch gekennzeichnet, daß**

- die Enden (13, 14) des Kabels steif an Befestigungsmittel (11, 12) angeschlossen sind, die mit den Massen fest verbunden werden können;
- das Kabel dadurch permanent verformt wird, daß dieses Kabel in Längsrichtung komprimiert und das Kabel in entgegengesetzter Richtung zu der ersten Ganghöhe der Wendel so verdrillt wird, daß ein Kontaktklotz für die Stoßdämpfung erreicht wird, welcher zwischen den Befestigungsmitteln (11, 12) einen weitgehend geraden Abschnitt (25) aufweist, der einen vertieften und ausgebauchten zentralen Teil (26) enthält.

23. Verfahren nach Anspruch 22, **dadurch gekennzeichnet, daß** der Winkel der Verdrillung und die Kompressionskraft je nach der gewünschten Steifigkeit des Kontaktklotzes eingestellt werden, die vorher bestimmt worden ist.

**Claims**

1. A mount (5, 28, 56, 62, 67) for damping shock and/or vibration between a first mass (29, 61, 64) and a second mass (30, 61, 65), the mount being characterized in that it comprises:

   . a substantially rectilinear cable comprising a plurality of multiwire strands (2), said cable comprising at least one segment (5, 25, 31, 32) having an enlarged middle portion (6, 26) forming a central cavity (7, 27); and
   . first and second means (11, 12, 36, 42, 56) for fixing the ends (13, 14) of the cable segment directly or indirectly to said first and second masses, said first and second fixing means being located, or substantially located, axially in line (15) with said segment.

2. A damping mount according to claim 1, characterized in that the strands (2) of the cable are helically wound around one another at a first pitch.

3. A mount according to either preceding claim, characterized in that the cable has an axial cavity (3) in the free state.

4. A mount according to claim 3, characterized in that the cable (1, 10) is permanently predeformed by being twisted in the opposite direction to that of the first pitch and by being compressed in the longitudinal direction, in order to form the enlarged middle portion (6, 26) of said cable segment (5, 25, 31, 32).

5. A mount according to any preceding claim, characterized in that the first helical pitch is longer than the distance h between said fixing means.

6. A mount according to any preceding claim, characterized in that the cable comprises a single segment (25), the means (11, 12) for fixing the ends of said segment being directly and respectively arranged to be secured to said first and second masses.

7. A mount according to any one of claims 1 to 5, characterized in that it has at least two segments (31, 32) arranged axially and separated by an intermediate fixing piece (33) which is arranged to be fixed laterally.

8. A mount according to any one of claims 1 to 5, characterized in that it has at least two cables arranged axially and separated by an intermediate fixing piece (33).

9. A mount according to any preceding claim, characterized in that the cable comprises at least two different types of strand.

10. A mount according to any preceding claim, characterized in that the wires of the strands are twisted helically in the opposite direction to the strands.

11. A mount according to any preceding claim, characterized in that it has six strands.

12. A mount according to any preceding claim, characterized in that it has at least two layers of strands.

13. A mount according to any preceding claim, characterized in that at least one of the fixing means (11, 13, 36, 56) comprises a tubular portion (16) into which a corresponding end (13, 14) of the cable is inserted as a friction fit.

14. A mount according to claim 13, characterized in that the end of the cable is fixed to the center end (19, 20) of the tubular portion (16) with respect to the cable.

15. A mount according to any preceding claim, characterized in that the cable is fixed to the fixing means by welding.

16. A mount according to any one of claims 1 to 14, characterized in that the cable is fixed to the fixing means by adhesive.

17. A mount according to claim 16, characterized in that the cable is fixed to the fixing means by an adhesive or resin in a blind tubular portion.

18. A mount according to any preceding claim, characterized in that the cable is fixed to the fixing means by crimping.

19. A mount according to claim 18, characterized in that the cable is fixed to the fixing means by overmolding a thermosetting or elastomeric material between the cable and the tubular portion, with the material being crimped or shrunk onto the cable.

20. A coupling (60) between two masses, characterized in that it comprise at least two mounts according to any preceding claim.

21. The use of the coupling according to claim 20 for vertically suspending of a mass (65) carried by a carrier mass (64).

22. A method of manufacturing a mount for damping shock and/or vibration between a first mass and a second mass, using a cable (1) comprising a plurality of strands (2) helically wound around one another at a first pitch and, in the free state, defining between them an axial cavity (3), the method being characterized in that:

    . the ends (13, 14) of the cable are rigidly fixed to fixing means (11, 12) suitable for being secured to said masses;
    . said cable is permanently deformed by compressing the cable in the longitudinal direction and by twisting said cable in the opposite direction to the first helical pitch, so as to obtain a mount that has, between said fixing means (11, 12), a substantially rectilinear portion (25) with a hollowed and enlarged central portion (26).

23. A method according to claim 22, characterized in that the angle of twist and the axial compressive force are adjusted as a function of the predetermined stiffness desired for the mount.

FIG. 1

FIG. 2

FIG. 3

FIG. 4

FIG. 5

FIG. 6

FIG. 7 a

FIG. 7 b

FIG. 8 a

FIG. 8 b

FIG. 9

FIG. 10

FIG. 11

FIG. 12